# EUROPEAN PATENT APPLICATION

(11) **EP 1 647 475 A2**
(43) Date of publication of application: **19.04.2006**
(21) Application number: 05022674.5
(22) Date of filing: 18.10.2005
(51) Int. Cl.: B62K 11/06, B62K 11/10, B62K 19/18

(54) **Vehicle body frame and motorcycle provided with the vehicle body frame**

(30) Priority: 18.10.2004 JP 2004303487; 07.10.2005 JP 2005294464
(71) Applicant: YAMAHA HATSUDOKI KABUSHIKI KAISHA, Iwata-shi Shizuoka-ken (JP)
(72) Inventor: Asamura, Kinji, Iwata-shi, Shizuoka-ken (JP)
(74) Representative: Grünecker, Kinkeldey, Stockmair & Schwanhäusser Anwaltssozietät

(57) **Abstract**

The present invention relates to a vehicle body frame being comprised of several frame pieces being divided along a split line in a vehicle width direction, wherein adjacent portions of the respective frame pieces are bonded together in a state of at least partially overlapping each other.

## Description

The present invention relates to a vehicle body frame, and in particular to a vehicle body frame including a cylindrical-shaped head pipe, by which a handle is supported to be freely steered, a main frame extending from the head pipe toward the rear of a vehicle, and a rear frame extending from the main frame toward the rear of the vehicle, and a motorcycle provided with such a vehicle body frame.

A vehicle body frame of a motorcycle generally includes a head pipe, by which a handle is supported to be freely steered left and right, a main frame extending from the head pipe toward the rear of a vehicle to support an engine unit, and a rear frame extending rearward from the main frame.

In manufacture of such vehicle body frame, from the viewpoint of achieving reduction in manufacturing cost, a method is in some cases adopted, in which the vehicle body frame is divided into a left part and a right part, the left and right parts are formed by casting, the both parts are butted against each other to be positioned, and the butted portions are joined together by friction agitating bonding, brazing, or the like (for example, see JP-A-2002-326594)

By the way, JP-A-2002-326594 adopts a construction, in which the left part and the right part are butted against each other to be positioned, and joined. In this case, when, for example, burr produced by cast molding remains on the butted portions, positioning of the left and right parts on the split line cannot be performed, which causes a problem that there is a need of deburring by means of machining and manufacturing manhour is correspondingly increased to lead to a low productivity. Also, the related art involves a problem that it is difficult to absorb dimensional errors of the left and right parts.

The invention has been thought of in view of the problems in the related art and has its object to provide a vehicle body frame as indicated above, which can dispense with deburring, in which dimensional errors of left and right parts are easily absorbed, and by which productivity can be improved, and a motorcycle as indicated above provided with the vehicle body frame.

This objective is solved in an inventive manner by a vehicle body frame being comprised of several frame pieces being divided along a split line in a vehicle width direction, wherein adjacent portions of the respective frame pieces are bonded together in a state of at least partially overlapping each other.

Preferably, the vehicle body frame further comprises a cylindrical-shaped head pipe, by which a handle is supported to be freely steered, a main frame extending from the head pipe toward the rear of a vehicle body, and a rear frame extending from the main frame toward the rear of the vehicle body.

Further, preferably the vehicle body frame comprises left and right frame pieces, which are divided into a left part and a right part along the split line in the vehicle width direction.

Therein, preferably at least portions of divided parts of the left and right frame pieces overlap each other relatively movably in a left and right direction of the vehicle and vertically, and at least portions of the overlapping parts thus overlapped are bonded together.

Beneficially, the frame pieces at the overlapping portions are weld-bonded with each other.

Therein, it is further beneficially if the overlapping parts are welded over the overall length of the overlapping portions.

According to a preferred embodiment, the left and right frame pieces include butt surfaces being butted in the left and right direction of the vehicle.

Therein, preferably the butt surfaces are arranged on front portions or rear portions of the left and right frame pieces.

According to another preferred embodiment, the left and right frame pieces overlap together to be relatively immovable in a vertical direction.

According to still another preferred embodiment, the left and right frame pieces are formed by casting.

According to yet another preferred embodiment, the split line of the left and right frame pieces is set along a vehicle center line.

It is further preferable if the left and right frame pieces include left and right head piece portions formed by dividing the head pipe into a left part and a right part in the vehicle width direction, and if the left and right head piece portions include butt surfaces being butted in the left and right direction of the vehicle, and the butt surface are welded together.

Therein, beneficially the head pipe includes upper and lower bearing press-fitted portions, into which bearings journaling a handle steering shaft are press-fitted, and is divided by a plane, which includes an axis of the bearing press-fitted portions, and weld traces are present on inner surfaces of the bearing press-fitted portions after weld-bonded portions are subjected to machining.

According to still another preferred embodiment, the left and right frame pieces include left and right head piece portions formed by dividing the head pipe into a left part and a right part, left and right main piece portions formed by dividing the main frame into a left part and a right part, and left and right rear piece portions formed by dividing the rear frame into a left part and a right part, the left head piece portion, the left main piece portion, and the left rear piece portion are formed integrally, and the right head piece portion, the right main piece portion, and the right rear piece portion are formed integrally.

According to yet another preferred embodiment, the left and right frame pieces include left and right main piece portions formed by dividing the main frame into a left part and a right part, and left and right rear piece portions formed by dividing the rear frame into a left part and a right part, the head pipe is formed integral with either of the left and right main piece portions, the left main piece portion and the left rear piece portion are formed integrally, and the right main piece portion and the right rear piece portion are formed integrally.

The above objective is further solved by a motorcycle comprising such a vehicle body frame.

In the following, the present invention is explained in greater detail with respect to several embodiments thereof in conjunction with the accompanying drawings, wherein:
- Fig. 1: is a side view showing a motorcycle, to which a vehicle body frame according to an embodiment is applied,
- Fig. 2: is a side view showing the vehicle body frame,
- Fig. 3: is a perspective view showing the vehicle body frame,
- Fig. 4: is a plan view showing the vehicle body frame,
- Fig. 5: is a cross sectional view showing a head pipe of the vehicle body frame,
- Fig. 6: is a cross sectional view showing a main frame of the vehicle body frame,
- Fig. 7: is a cross sectional view showing the main frame (a cross sectional view taken along the line VII-VII in Fig. 2),
- Fig. 8: is a cross sectional view showing the main frame (a cross sectional view taken along the line VIII-VIII in Fig. 2),
- Fig. 9: is a plan view showing a rear frame of the vehicle body frame (a view as viewed along an arrow IX in Fig. 2),
- Fig. 10: is a cross sectional view showing the rear frame (a cross sectional view taken along the line X-X in Fig. 2),
- Fig. 11: is a cross sectional view showing the rear frame (a cross sectional view taken along the line XI-XI in Fig. 2),
- Fig. 12: is a cross sectional view showing the rear frame (a cross sectional view taken along the line XII-XII in Fig. 2),
- Fig. 13: is a cross sectional view showing pivots of the main frame (a cross sectional view taken along the line XIII-XIII in Fig. 2),
- Fig. 14: is a schematic view illustrating a configuration, in which the vehicle body frame is divided,
- Fig. 15: is a schematic view illustrating a further configuration, in which the vehicle body frame is divided,
- Fig. 16: is a schematic view illustrating a still further configuration, in which the vehicle body frame is divided,
- Fig. 17: is a schematic view illustrating a still further configuration, in which the vehicle body frame is divided, and
- Fig. 18: is a schematic view illustrating a still further configuration, in which the vehicle body frame is divided.

An embodiment will be described below with reference to the drawings.

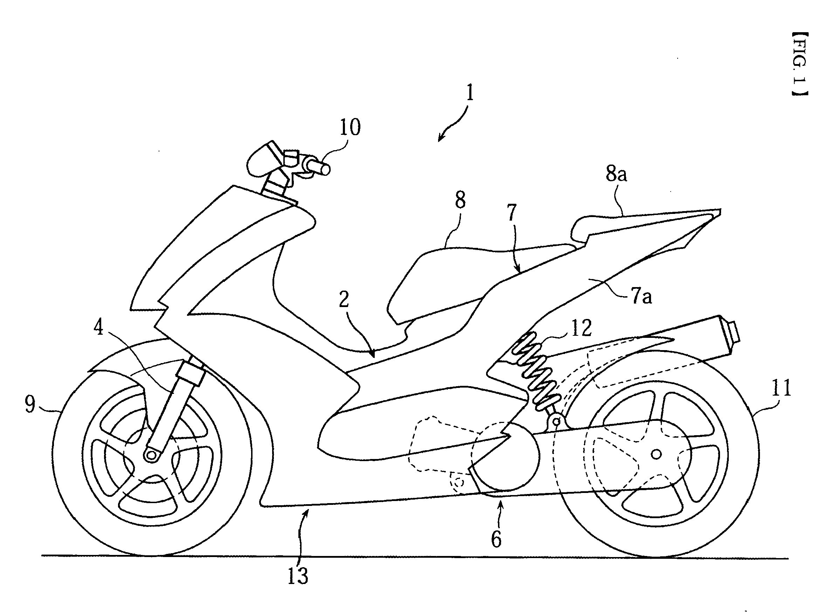

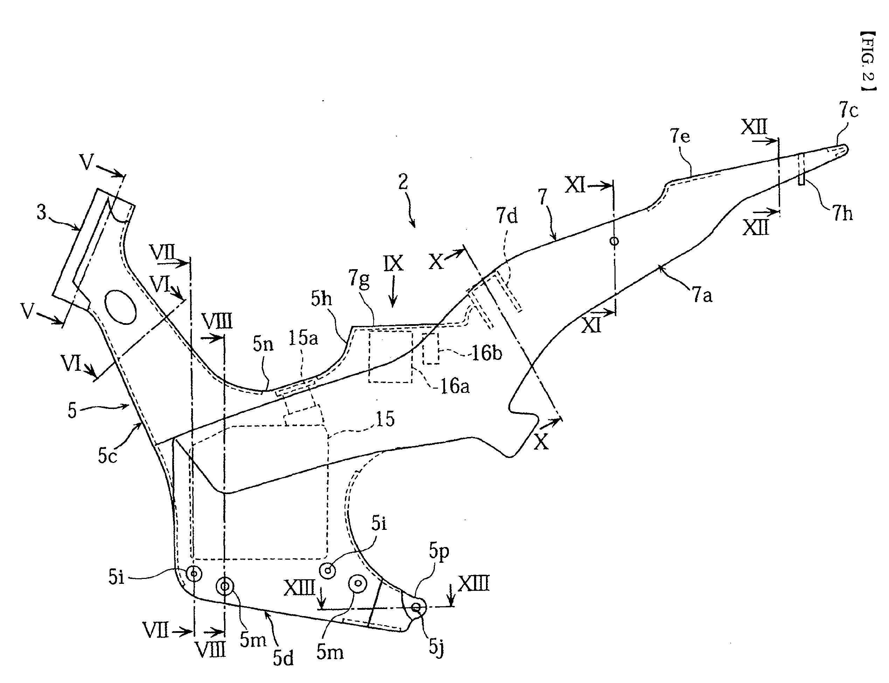

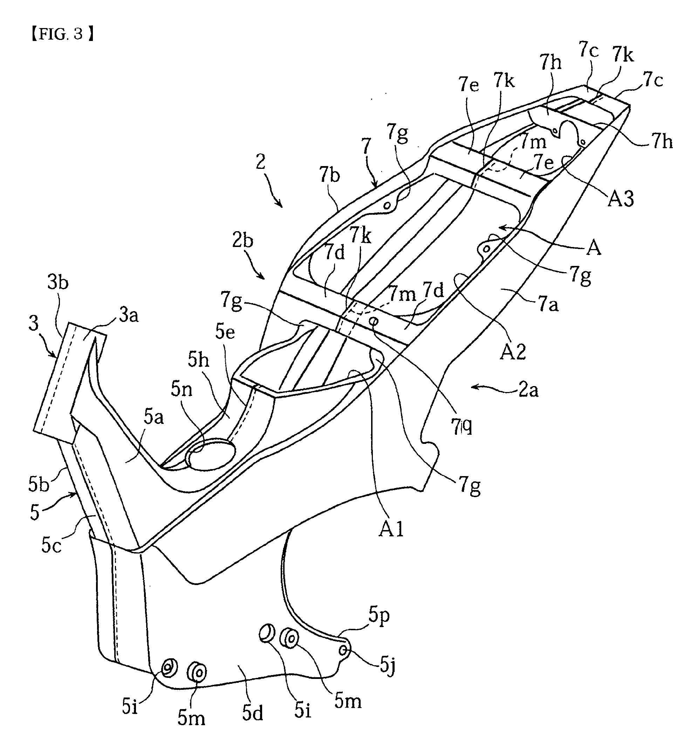

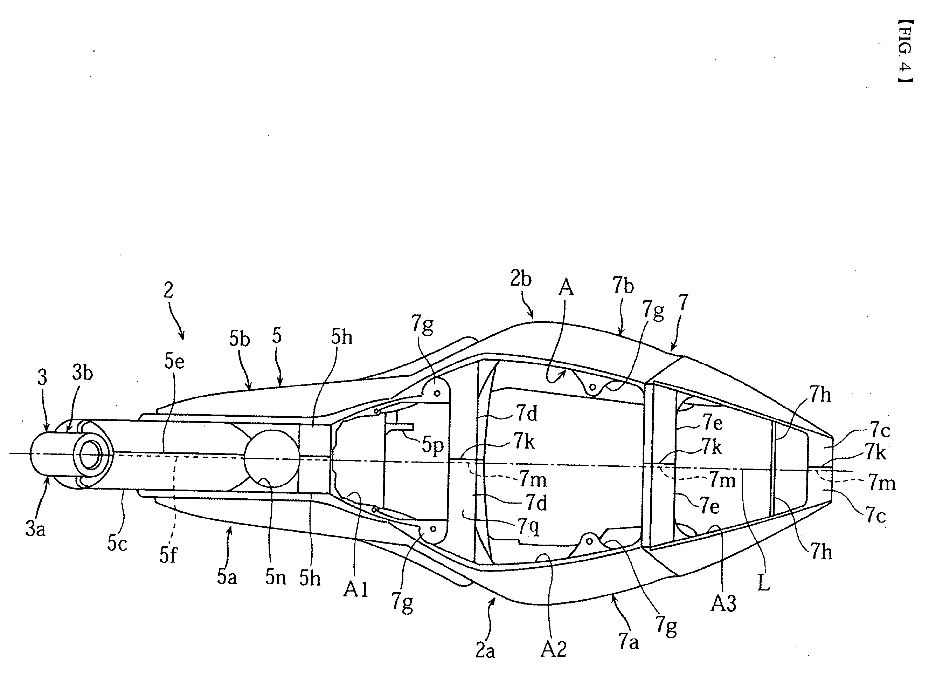

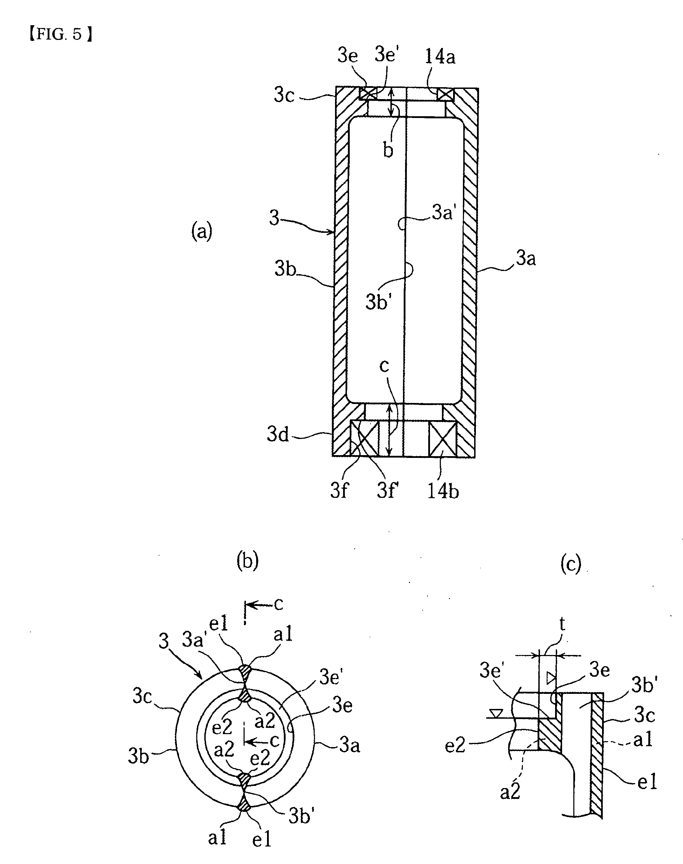

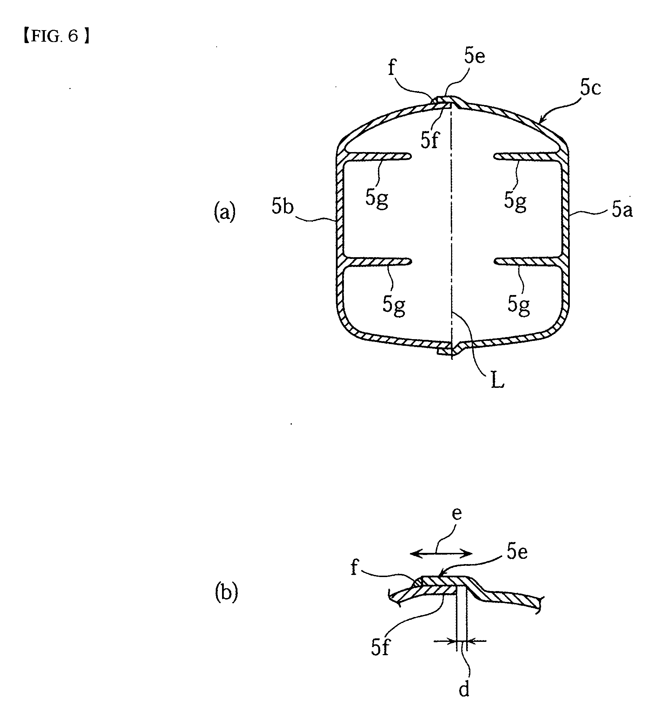

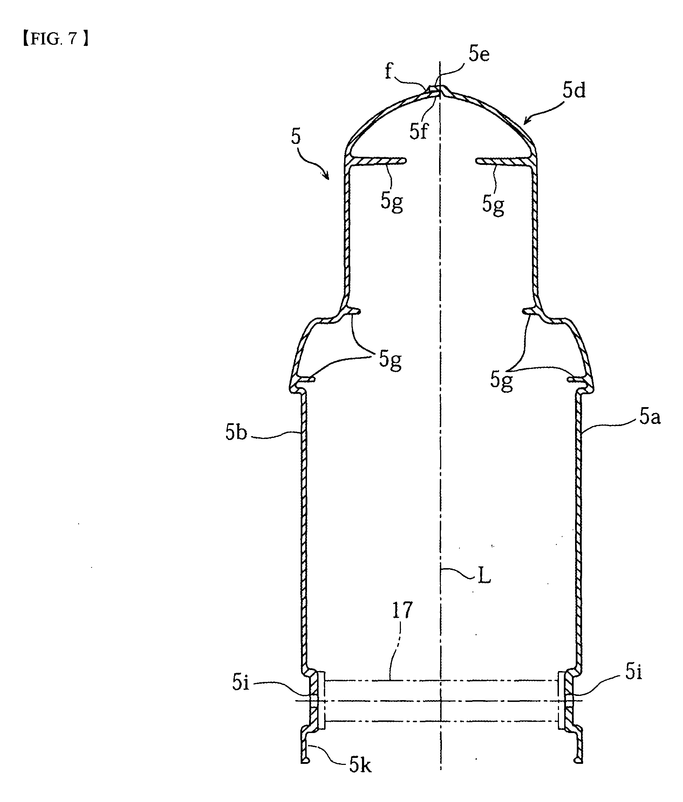

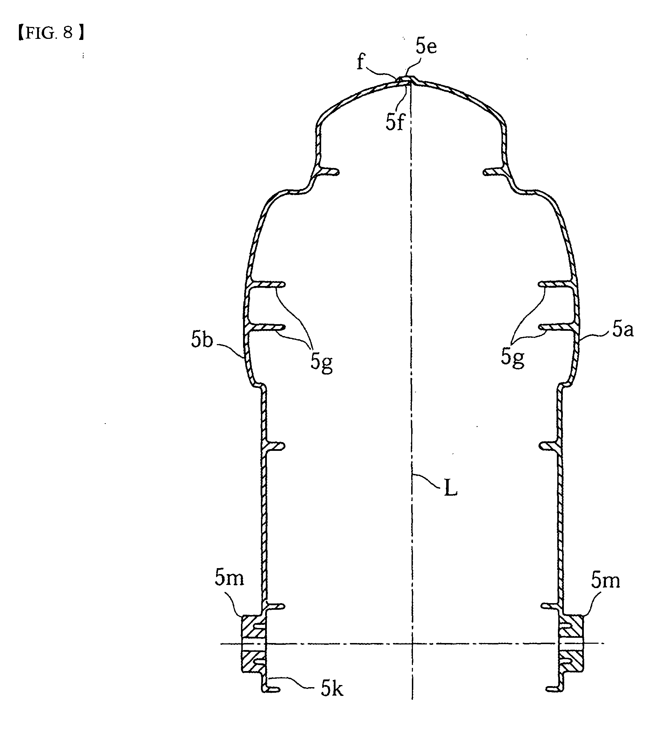

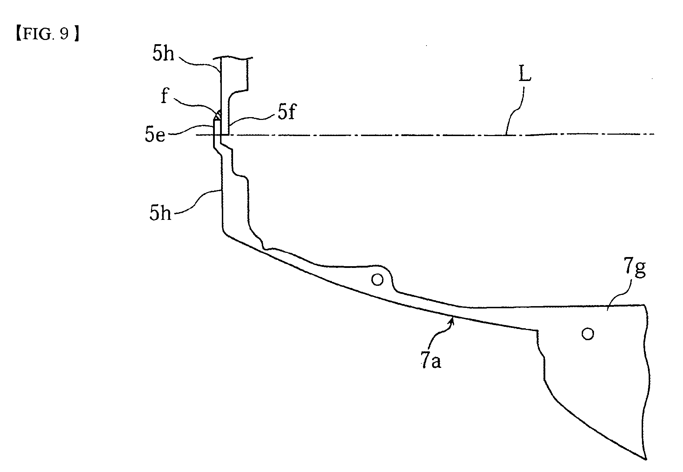

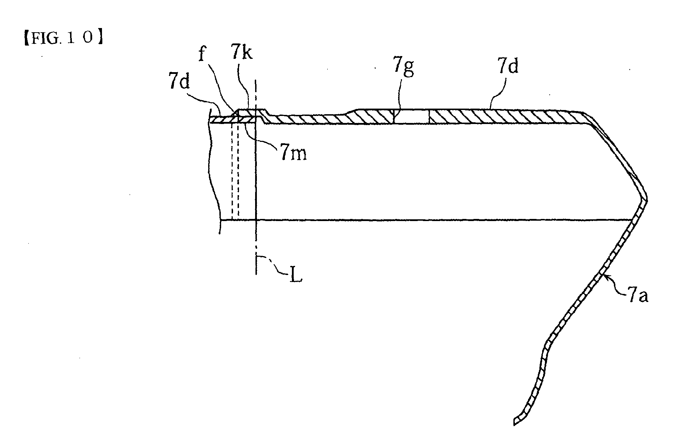

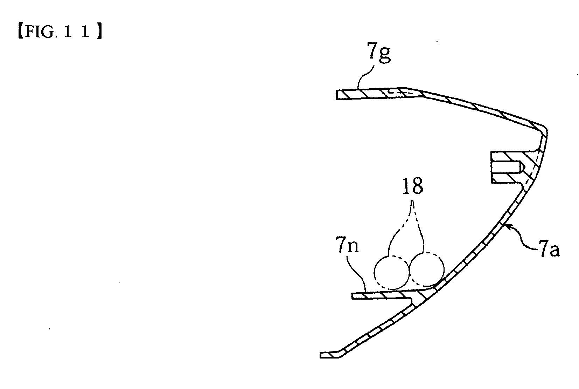

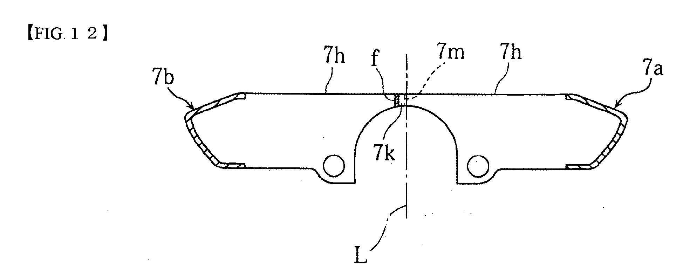

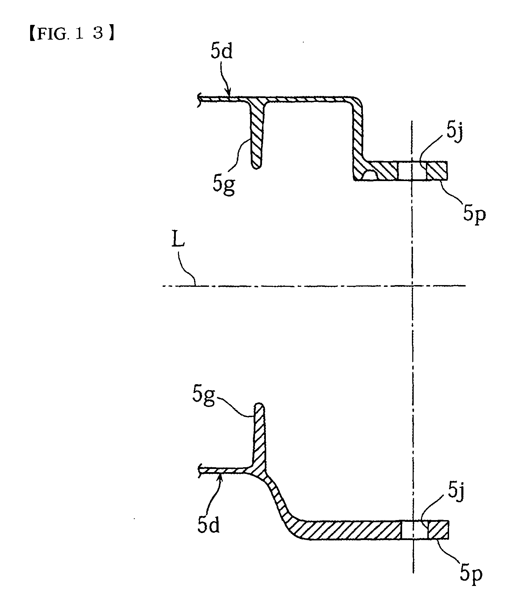

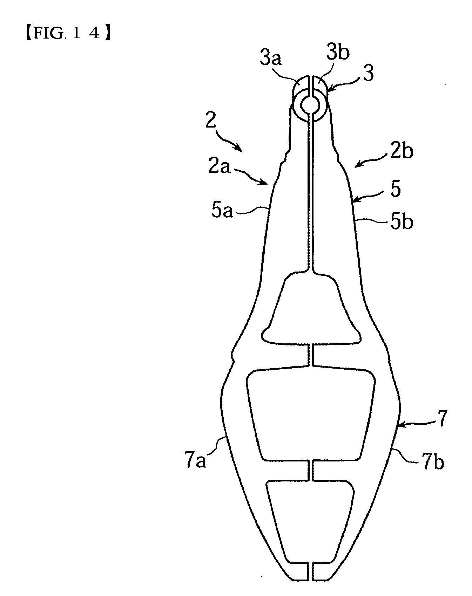

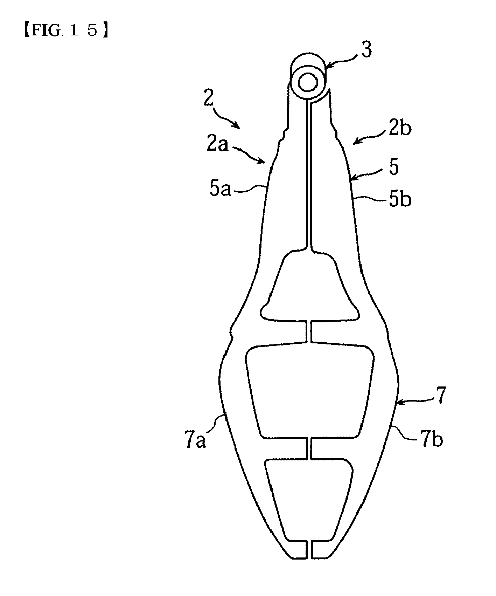

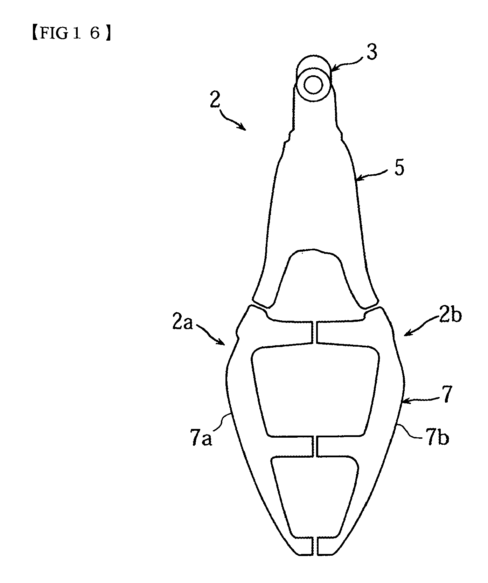

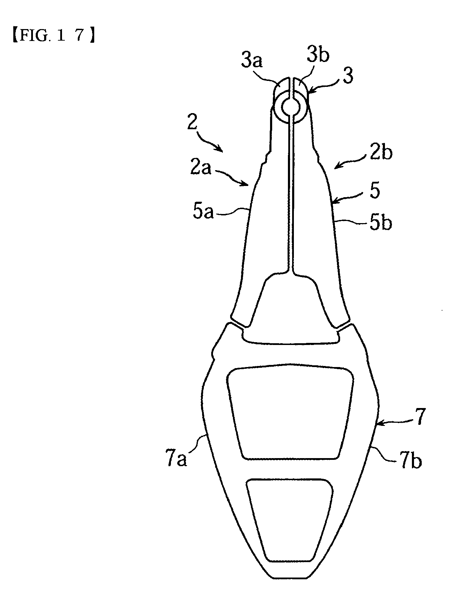

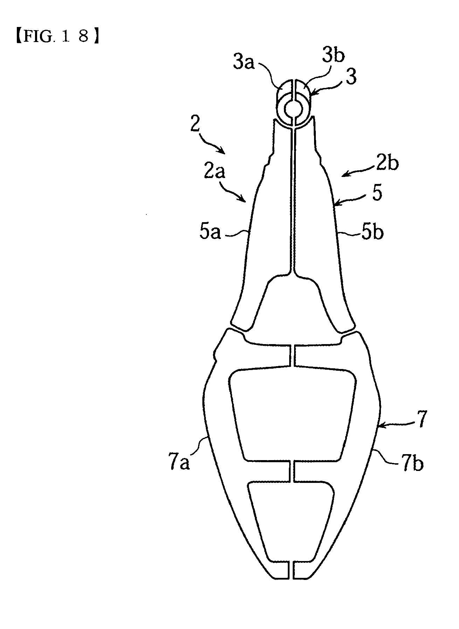

Figs. 1 to 14 are views illustrating a vehicle body frame for motorcycles, according to an embodiment, Fig. 1 is a left side view showing a motorcycle, to which the vehicle body frame according to the embodiment is applied, Figs. 2, 3 and 4, respectively, are a left side view, a perspective view, and a plan view showing the vehicle body frame, Fig. 5(a) is a cross sectional view showing a head pipe (a cross sectional view taken along the line V-V in Fig. 2), Fig. 5(b) is a plan view showing the head pipe, Fig. 5(c) is a cross sectional view showing an essential part of a bearing fitted part of the head pipe, Fig. 6(a) is a cross sectional view showing a main frame (a cross sectional view taken along the line VI-VI in Fig. 2), Fig. 6(b) is a cross sectional view showing a welded part of the main frame, Figs. 7 and 8 are cross sectional views showing the main frame (a cross sectional view taken along the line VII-VII and a cross sectional view taken along the line VIII-VIII in Fig. 2), Fig. 9 is a plan view showing a seat base of a rear frame (a view as viewed along an arrow IX in Fig. 2), Figs. 10, 11, and 12, respectively, are cross sectional views showing the rear frame (a cross sectional view taken along the line X-X, a cross sectional view taken along the line XI-XI, and a cross sectional view taken along the line XII-XII in Fig. 2), Fig. 13 is a cross sectional view showing a pivot of the main frame (a cross sectional view taken along the line XIII-XIII in Fig. 2), and Fig. 14 is a schematic view illustrating a configuration, in which a vehicle body frame is divided, in the embodiment. In addition, front, rear, left, right, upper, and lower in the embodiment indicate the positional relationship as viewed in a state of being seated on a seat.

In the drawings, the reference numeral 1 denotes a motorcycle having the following schematic construction. A front fork 4 is supported by a head pipe 3 at a front end of a vehicle body frame 2 to be freely steered left and right, an engine unit 6 is supported by a rear portion of a main frame 5, which extends rearwardly of the head pipe 3, to freely swing vertically, and a main seat 8 and a tandem seat 8a are mounted on an upper surface of a rear frame 7, which extends rearward and obliquely upward from the main frame 5. The front fork 4 supports a front wheel 9 at a lower end thereof and arranges a steering handle 10 at an upper end thereof. Also, a rear wheel 11 is supported at a rear end of the engine unit 6 and a cushioning unit 12 for suspension of the rear wheel is arranged between a central portion of the engine unit 6 in a longitudinal direction and a front portion of the rear frame 7. A vehicle body cover 13 surrounds a periphery of that portion of the vehicle body frame 2, which extends from the head pipe 3 to the main frame 5.

The vehicle body frame 2 is formed by metal mold casting of an aluminum alloy, more specifically, left and right frame pieces 2a, 2b, which form left and right portions of the vehicle body frame in a vehicle breadth direction, are formed by metal mold casting, and the left and right frame pieces 2a, 2b are joined together by welding. In other words, as described later, the vehicle body frame 2 is divided into the left and right frame pieces 2a, 2b along a center line L, which coincides with a vehicle center line, joint flange portions and joint edge portions, which form divided portions, are caused to overlap each other, and overlapping portions thus overlapped are weld-bonded.

The left and right frame pieces 2a, 2b are formed by integrally forming left and right head piece portions 3a, 3b, which form the head pipe 3, left and right main piece portions 5a, 5b, which form a portion of the main frame 5, and left and right rear piece portions 7a, 7b, which form a portion of the rear frame 7.

The head pipe 3 is cylindrical-shaped as shown in Fig. 5 and upper and lower ends thereof form bearing press-fitted portions 3c, 3d. Upper and lower bearing holes, into which upper and lower bearings 14a, 14b are press-fitted, are formed in the upper and lower bearing press-fitted portions 3c, 3d by means of machining. The bearing holes include press-fitted surfaces 3e, 3f, into which outer peripheral surfaces of the bearings are press-fitted, and seat surfaces 3e', 3f, against which end surfaces of the bearings abut. In addition, since a larger load than that applied to the upper bearing 14a acts on the lower bearing 14b, the lower bearing 14b having a larger diameter than that of the upper bearing 14a is adopted.

Here, mating surfaces 3a', 3b' of the left and right head piece portions 3a, 3b are subjected to machining to be made flat butt surfaces free of casting burr or the like, and outer peripheral side edges and inner peripheral side edges of the butt surfaces are subjected to edge preparation whereby V-grooves (edge grooves) a1, a2 are formed when the both mating surfaces are butted against each other. Portions of the V-grooves a1, a2 are weld-bonded in a state, in which the mating surfaces are butted against each other, so that weld traces e1, e2 are present on the portions of the V-grooves a1, a2. In addition, while the mating surfaces are butted directly against each other to be welded, weld-bonding may be performed with another member interposed between the both mating surfaces.

A front portion of the V-groove a1 on the outer peripheral side is formed over an entire length of the head pipe 3 and a rear portion thereof is formed over an entire length of a portion except a joint with the main frame 5. Also, the V-groove a2 on the inner peripheral side is formed in that region, into which a welding torch can be inserted, and in a region (see Figs. 5(b) and 5(c)) extending axially centrally over bottom walls of the upper and lower bearing press-fitted portions 3c, 3d.

Also, the press-fitted surfaces 3e, 3f and the seat surfaces 3e', 3f, which define the bearing holes, are formed by the metal mold casting and the machining in an after-process of weld bonding. Inner peripheral sides of the mating surfaces must be weld-bonded after the machining. Hereupon, according to the embodiment, the V-groove a2 on the inner peripheral side is set to be deeper than a margin t for machining. As a result, weld traces are present on inner peripheral surfaces of the bearing holes 3e, 3f after the machining.

The main frame 5 includes an inclined part 5c extending obliquely downward from the head pipe 3 toward the rear of the vehicle, and a suspension part 5d extending contiguous to the inclined part 5c and rearward to accommodate a fuel tank 15, etc. and to suspend the engine unit 6.

As shown in Fig. 6, a portion of the inclined part 5c is closed in cross section to be substantially rectangular-shaped in transverse cross section, and integrally formed therein with a plurality of reinforcement ribs 5g, which project inward in the vehicle breadth direction. As shown in Figs. 7 and 8, the suspension part 5d is in the form of a box with a lower end thereof opened, and a plurality of reinforcement ribs 5g are integrally formed in the suspension part 5d to project inward in the vehicle breadth direction.

Left and right pivots 5p, 5p are formed on lower, rear ends of the suspension part 5d to project toward the rear of the vehicle. As shown in Fig. 13, the left pivot 5p is offset outward from the vehicle to separate from a vehicle center line L and the right pivot 5p is offset inward from the vehicle to approach the vehicle center line L, so that the pivot part for suspension of the engine is generally offset leftward from the vehicle.

Weld-bonded portions of the left and right main piece portions 5a, 5b, which form the inclined part 5c and the suspension part 5d, are structured as follows. Either of the left and right main piece portions 5a, 5b, that is, the left main piece portion 5a, is formed on a facing edge thereof with a joint flange portion 5e, which defines a vertically outwardly expanded step, and a joint edge 5f of the right main piece portion 5b is inserted inside the joint flange portion 5e to be arranged so as to vertically overlap the joint flange portion relatively movably in the vehicle breadth direction and relatively immovably vertically.

As shown in Figs. 7 and 8, the suspension part 5d is in the form of a box, of which a lower end is opened downward to include an article receipt port 5k, and an interior of the receipt port 5k defines a storage part to accommodate the fuel tank 15, etc.

A pair of front and rear bolt holes 5i, 5i are formed on a lower portion of the suspension part 5d to fix thereto a pair of front and rear support brackets 17, 17, which support the fuel tank 15. Also, an oil feed opening 5n is formed on an upper surface wall of the suspension part 5d, and an oil feed port 15a of the fuel tank 15 is positioned in the oil feed opening 5n. In addition, the reference numerals 5m, 5m denote foot board mount bosses.

Since the article receipt port 5k is formed at the lower end of the suspension part 5d as described above, the joint flange portion 5e is formed only on the upper side and the joint edge 5f overlaps the flange portion 5e relatively movably in the vehicle breadth direction and relatively immovably vertically. In addition, the support brackets 17, 17 act as cross members to ensure rigidity of the lower end of the suspension part 5d in the vehicle breadth direction.

Here, a little clearance d (see Fig. 6(b)) is provided between the step of the joint flange portion 5e and a tip end of the joint edge 5f whereby the joint flange portion 5e and the joint edge 5f are made relatively movable in the vehicle breadth direction (e direction) but relatively immovable vertically. A tip end of the joint flange portion 5e of the left main piece portion 5a and the joint edge 5f of the right main piece portion 5b are weld-bonded at overlapping portions thereof. The character f denotes a weld bead. The weld bead f extends along the vehicle center line L in a position offset substantially a width of the joint flange portion 5e from the vehicle center line L in the vehicle breadth direction.

The rear frame 7 is formed to cooperate with an upper rear edge 5h of the main frame 5 to define an annular shape as viewed in plan view (from above). Specifically, an annular opening A having a substantially rectangular shape being lengthy in the longitudinal direction of the vehicle is formed by the upper rear edge 5h of the main frame 5, the left and right rear piece portions 7a, 7b integrally extending rearward from the upper rear edge 5h, and rear end cross portions 7c, 7c connecting rear ends of the both rear piece portions 7a, 7b together. More specifically, the left and right rear piece portions 7a, 7b expand outward from the rear edge 5h of the main frame 5 to be inclined so as to be positioned inward as they go toward the rear end cross portions 7c as viewed in plan view, and are decreased in vertical dimension as they go rearward from the front as viewed in side view.

The left and right rear piece portions 7a, 7b of the rear frame 7 are formed integral with front and rear cross portions 7d, 7e, which extend toward a center of the vehicle, and lamp support portions 7h, 7h, which are positioned between the rear cross portions 7e and the rear end cross portions 7c to extend toward the center of the vehicle. A rear lamp unit (not shown) is mounted to the lamp support portions 7h.

The front cross portions 7d, 7d, the rear cross portions 7e, 7e, the rear end cross portions 7c, 7c, and the lamp support portions 7h, 7h overlap together to be movable in the vehicle breadth direction and immovable in the longitudinal direction, and the overlapping portions are weld-bonded. Specifically, joint flange portions 7k, respectively, are formed on the cross portions 7d, 7e, 7c and the lamp support portion 7h on the left in a manner to define steps, and respective joint edges 7m on the right are inserted on inner surfaces of the joint flange portions 7k to be relatively movable in the vehicle breadth direction and relatively immovable vertically. The respective overlapping portions are joined by welding (see Figs. 10 and 12). Also, for the rear edges 5h of the left and right main piece portions 5a, 5b, the joint flange portion 5e and the joint edge 5f overlap each other longitudinally to be weld-bonded (see Fig. 9).

The front cross portions 7d are downward C-shaped in transverse cross section, the front cross portion 7d on the left is formed with a cushion mount hole 7q, which is positioned outwardly of the vehicle from the vehicle center line L, and an upper end of the cushioning unit 12 is connected to the mount hole 7q.

A plurality of seat bases 7g are formed on an edge of the opening A of the left and right rear piece portions 7a, 7b and the main seat 8 is supported by the seat bases 7g.

Upper edges of the left and right rear piece portions 7a, 7b function as bearing seats for a seat weight, and lower edges thereof function as a standing handle, which a driver grasps at the time of standing.

A space in the opening A of the left and right rear piece portions 7a, 7b makes an article storage space, and a battery 16a, a fuse box 16b, etc. are accommodated in a front opening A1 defined by the rear edges 5h, the left and right rear piece portions 7a, 7b, and the front cross portions 7d. An article storage box (not shown) sized to be able to accommodate a raincoat or the like is arranged in a middle opening A2 defined by the front cross portions 7d, the left and right rear piece portions 7a, 7b, and the rear cross portions 7e.

Further, a rib 7n functioning as a support bracket is formed on an inner surface of the left rear piece portion 7a, and an electric wiring 18, etc. is laid on the rib 7n. The front opening A1 and the middle opening A2 are covered by the main seat 8 to be openable and closeable. Also, a rear opening A3 defined by the rear cross portions 7e and the rear end cross portions 7c is covered by the tandem seat 8a to be openable and closeable. In addition, the rear opening A3 may be closed by forming upper wall portions, which extend inward, on the left and right rear piece portions.

Outer surfaces of the left and right rear piece portions 7a, 7b are not covered by the vehicle body cover 13 but exposed outside to function as an exterior part. The outer surfaces of the left and right rear piece portions 7a, 7b are subjected to buffing to give luster.

A major part of the rear frame 7, specifically, portions of the left and right rear piece portions 7a, 7b except the respective cross portions 7c to 7e and the lamp support portion 7h are curved in cross sectional shape to be opened inward in the vehicle breadth direction as viewed in a transverse cross section cut by a plane perpendicular to the vehicle center line L. Also, the rear end cross portions 7c are curved in cross sectional shape to be opened toward the front of the vehicle. In addition, the left and right rear piece portions may be curved in shape to be opened outward from the vehicle, and the rear end cross portions may be closed and cylindrical-shaped in cross section.

The weld-bonding work of the left and right frame pieces 2a, 2b is performed in a state, in which the left and right frame pieces 2a, 2b are first set in a positioning jig, the left and right head piece portions 3a, 3b are butted against each other, and positioning is made by relatively moving the left and right main piece portions 5a, 5b and the left and right rear piece portions 7a, 7b between the joint flange portions 5e, 7k and the joint edges 5f, 7m in the vehicle breadth direction with the left and right head piece portions 3a, 3b as a reference. The welding work is performed to proceed from a portion having a small heat capacity to a portion having a large heat capacity, that is, in the order from a region being small in thickness or area to a region being large in thickness or area.

According to the embodiment, since the left and right main piece portions 5a, 5b and the left and right rear piece portions 7a, 7b are weld-bonded in a state of overlapping together to be relatively movable in the vehicle breadth direction and relatively immovable vertically, burr produced at the time of casting, which possibly remains on split surfaces of the respective pieces, interferes little with a split surface on the mating side, and positioning can be made by relatively moving the left and right main piece portions 5a, 5b and the left and right rear piece portions 7a, 7b in the vehicle breadth direction without application of deburring, thus enabling an improvement in productivity. Also, since the burr is allowable, die life can be substantially extended.

Also, dimensional errors of the left and right frame pieces 2a, 2b can be absorbed by relatively moving the respective frame pieces 2a, 2b in the vehicle breadth direction, and besides impossibility of relative movements in the vertical direction makes a guide in case of relative movements in the vehicle breadth direction, so that it is possible to surely position the left and right frame pieces 2a, 2b.

Also, since the split mating surfaces 3a', 3b' of the left and right head piece portions 3a, 3b are butted against each other, and the left and right main piece portions 5a, 5b and the left and right rear piece portions 7a, 7b are caused to overlap together in a manner to be made relatively movable in the vehicle breadth direction, positioning can be readily and accurately made by applying machining only on the split mating surfaces 3a', 3b' of the left and right head piece portions 3a, 3b, and relatively moving the left and right main piece portions 5a, 5b and the left and right rear piece portions 7a, 7b in the vehicle breadth direction with the split mating surfaces 3a', 3b' as a reference.

Also, since the V-grooves a1, a2 are formed on outer and inner surfaces of the divided portions of the press-fitted portions 3c, 3, the V-grooves a2 on the inner surfaces are set to a depth to reach the press-fitted surfaces 3e, 3f, and these V-grooves are welded, weld traces are left on the press-fitted surfaces 3e, 3f even in a state, in which the V-grooves a2 on the inner surfaces are subjected to machining to form the press-fitted surfaces 3e, 3f, so that it is possible to ensure strength and stiffness for the head pipe 3.

Further, since the split line of the left and right frame pieces 2a, 2b is set along the vehicle center line L, distortion by heating at the time of welding can be restricted as compared with the case where the split line is made offset from the vehicle center line L. As a result, the process of stress relieve after welding can be made unnecessary, or lessened, thus enabling a further improvement in productivity.

Also, since the vehicle body frame 2 is manufactured by metal mold casting of an aluminum alloy, it is possible to achieve lightening of a whole motorcycle and to reduce parts in number.

According to the embodiment, since a portion having a small heat capacity is welded in advance of a portion having a large heat capacity in weld-bonding the left and right frame pieces 2a, 2b, the welding work is not made complicate and distortion by heating at the time of welding can be restricted. That is, when welding is started, welding heat accumulates in the frame to cause a portion having a small heat capacity to excessively rise in temperature, so that control for gradual change of welding conditions is needed but control on such welding conditions is made simple according to the embodiment.

According to the embodiment, since the rear frame 7 is formed to define an annular shape as a whole as viewed in plan view and those portions of the left and right rear piece portions 7a, 7b, which are positioned on the left and right of the vehicle, are curved in shape to be opened toward an interior of the vehicle as viewed in transverse cross section, so that although the rear frame 7 is shaped to be large in width and lengthy in the longitudinal direction, it is possible to restrict an increase in weight while ensuring rigidity for the rear frame 7 itself.

Also, since the rear frame 7 can be made large as described above, the opening A of the rear frame 7 can be made large and a space in the opening A can be made an article storage space.

Since the rear frame 7 is manufactured by casting of an aluminum alloy and subjected to buffing to give luster, it is caused to be exposed outside to be able to serve as an exterior part, and any cover member can be dispensed with, thus enabling reducing parts in number.

In addition, while according to the embodiment, the left and right frame pieces 2a, 2b are caused to overlap together along the overall length of the split line and the overlapping portions are welded together over the overall length, overlapping may be made at least partially on the split line and at least a part of the overlapping portions may be welded in the invention. In this case, the remainder of the overlapping portions may be joined by means of, for example, bolting or the like. Also, the head piece portions may be joined together by means of bolting, or the head piece portions and the main piece portions may be joined by means of bolting.

Also, while according to the embodiment, the left and right frame pieces 2a, 2b are caused to overlap together so that the left frame piece is positioned on a lower side and the right frame piece is positioned on an upper side, it goes without saying that overlapping may be made reverse so that the left frame piece is positioned on the upper side and the right frame piece is positioned on the lower side.

Here, while the embodiment has been described, as shown in Fig. 14, with respect to the case where the left and right frame pieces 2a, 2b, which form the vehicle body frame 2, comprise the left and right head piece portions 3a, 3b, the left and right main piece portions 5a, 5b, and the left and right rear piece portions 7a, 7b, the respective piece portions 3a, 5a, 7a on the left are formed integrally, and the respective piece portions 3b, 5b, 7b on the right are formed integrally, various modifications can be adopted as the vehicle body frame 2 of the embodiment.

For example, it is possible to adopt a configuration, in which a head pipe 3 is not divided, only a main frame 5 and a rear frame 7 are divided, and the head pipe 3 is formed integral with either of left and right main pieces (in this example, the left main piece 2a) as shown in Fig. 15, a configuration, in which a head pipe 3 and a main frame 5 are not divided, and only a rear frame 7 is divided as shown in Fig. 16, and a configuration, in which a rear frame 7 is not divided and a head pipe 3 and a main frame 5 are divided into left and right sections as shown in Fig. 17. Further, it is possible to adopt a configuration, in which a head pipe 3, a main frame 5, and a rear frame 7 are formed separately and then divided into left and right sections as shown in Fig. 18, as the vehicle body frame 2 of the embodiment.

The description above discloses (amongst others) an embodiment of a vehicle body frame comprising a cylindrical-shaped head pipe, by which a handle is supported to be freely steered, a main frame extending from the head pipe toward the rear of a vehicle, and a rear frame extending from the main frame toward the rear of the vehicle, and wherein the vehicle body frame comprises left and right frame pieces, which are divided into a left part and a right part along a split line in a vehicle breadth direction, and at least portions of divided parts of the left and right frame pieces overlap relatively movably in a left and right direction of the vehicle and vertically, and at least portions of the overlapping parts thus overlapped are welded together.

With the vehicle body frame according to the above embodiment, since at least portions of the left and right frame pieces overlap relatively movably in the vehicle breadth direction and are weld-bonded, burr possibly remaining on split surfaces of the left and right frame pieces interferes little with a split surface on the mating side, thus enabling dispensing with deburring. Also, dimensional errors of the left and right frame pieces can be absorbed by relatively moving the respective frame pieces in the vehicle breadth direction.

Preferably, the left and right frame pieces include left and right head piece portions formed by dividing the head pipe into a left part and a right part, left and right main piece portions formed by dividing the main frame into a left part and a right part, and left and right rear piece portions formed by dividing the rear frame into a left part and a right part, the left head piece portion, the left main piece portion, and the left rear piece portion are formed integrally, and the right head piece portion, the right main piece portion, and the right rear piece portion are formed integrally.

Since with the above embodiment, the left and right head piece portions, the main piece portions, and the rear piece portions are formed integrally, and with the invention of claim 3, the head pipe is not divided and only the main frame and the rear frame are divided, the welding and assembling work of the left and right frame pieces is easy, and it is possible to enhance joint portions of the head pipe and the main frame in rigidity and strength and to avoid worsening of outward appearance due to weld bead or the like.

Preferably, the left and right frame pieces include left and right main piece portions formed by dividing the main frame into a left part and a right part, and left and right rear piece portions formed by dividing the rear frame into a left part and a right part, the head pipe is formed integral with either of the left and right main piece portions, the left main piece portion and the left rear piece portion are formed integrally, and the right main piece portion and the right rear piece portion are formed integrally.

With the above embodiment, since the overlapping parts are welded over the overall length thereof, it is possible to enhance joint portions in rigidity and strength.

Beneficially, the overlapping parts are welded over the overall length thereof.

Further, beneficially, the left and right frame pieces include butt surfaces being butted in the left and right direction of the vehicle.

Still further, beneficially, the butt surfaces are arranged on front portions or rear portions of the left and right frame pieces.

Yet further, beneficially, the left and right frame pieces include left and right head piece portions provided by dividing the head pipe into a left part and a right part in the vehicle breadth direction, the left and right head piece portions include butt surfaces being butted in the left and right direction of the vehicle, and the butt surfaces are welded together.

With these embodiments, since the butt surfaces are formed to permit the left and right frame pieces to be butted against each other, the left and right frame pieces can be readily and accurately positioned by applying machining only on the butt surfaces and relatively moving the left and right frame pieces in the vehicle breadth direction with the butt surfaces as a reference.

According to a further embodiment, the left and right frame pieces overlap together to be relatively immovable in a vertical direction.

With this embodiment, the left and right frame pieces are made relatively immovable in the vertical direction whereby guide can be provided in case of relative movements in the vehicle breadth direction, thus enabling surely positioning the left and right frame pieces.

According to another embodiment, the left and right frame pieces are formed by casting.

With the above embodiment, since burr is made allowable, die life can be substantially extended in the case where the left and right frame pieces are formed by casting.

Further, preferably the split line of the left and right frame pieces is set along a vehicle center line.

With this embodiment, since the split line of the left and right frame pieces is set along a vehicle center line, distortion by heating at the time of welding can be restricted as compared with the case where the split line is made offset from the center line. As a result, the process of stress relieve after welding can be made unnecessary, or lessened, thus enabling a further improvement in productivity.

Here, setting of the split line along the vehicle center line covers not only the case where the split line is made in agreement with the vehicle center line, but also the case where the split line is offset from the vehicle center line within that range, in which distortion by heating in welding can be restricted to a degree not to become an issue in practical use, for example, the case where the split line is offset from the vehicle center line by twice a width of a weld bead, or a margin of overlapping.

Further, preferably the head pipe includes upper and lower bearing press-fitted portions, into which bearings journaling a handle steering shaft are press-fitted, and is divided by a plane, which includes an axis of the bearing press-fitted portions, and weld traces are present on inner surfaces of the bearing press-fitted portions after weld-bonded portions are subjected to machining.

In such a case where the left and right head piece portions provided by dividing the head pipe by a plane, which includes an axis of the bearing press-fitted portions, are weld-bonded, weld traces are present on the inner surfaces of the bearing press-fitted portions, that is, the inner surfaces of the bearing press-fitted portions are also welded, so that it is possible to ensure rigidity and strength, which are demanded of the head pipe.

Still further, preferably the description provides a motorcycle comprising the vehicle body frame according to one of the above embodiments.

With this embodiment, since the vehicle body frame is adopted in a motorcycle, the whole motorcycle can be enhanced in productivity and parts can be reduced in number.

The description above refers to a particularly beneficial embodiment in order to provide a vehicle body frame enabling readily performing positioning on a split line without an increase in manufacturing manhour, which is a vehicle body frame 2 including a cylindrical-shaped head pipe 3, by which a handle 10 is supported to be freely steered, and a main frame 5 extending from the head pipe 3 toward the rear of a vehicle, the head pipe 3 and the main frame 5 being provided by weld-bonding left and right frame pieces 2a, 2b, which are divided into a left part and a right part in a vehicle breadth direction, along a split line, at least portions of the weld-bonded parts overlapping together to be relatively movable, and the overlapping portions being welded.

## Claims

1. Vehicle body frame being comprised of several frame pieces being divided along a split line in a vehicle width direction, wherein adjacent portions of the respective frame pieces are bonded together in a state of at least partially overlapping each other.

2. Vehicle body frame according to claim 1, further comprising a cylindrical-shaped head pipe, by which a handle is supported to be freely steered, a main frame extending from the head pipe toward the rear of a vehicle body, and a rear frame extending from the main frame toward the rear of the vehicle body.

3. Vehicle body frame according to claim 1 or 2, wherein the vehicle body frame comprises left and right frame pieces, which are divided into a left part and a right part along the split line in the vehicle width direction.

4. Vehicle body frame according to claim 3, wherein at least portions of divided parts of the left and right frame pieces overlap each other relatively movably in a left and right direction of the vehicle and vertically, and at least portions of the overlapping parts thus overlapped are bonded together.

5. Vehicle body frame according to one of the claims 1 to 4, wherein the frame pieces at the overlapping portions are weld-bonded with each other.

6. Vehicle body frame according to claim 5, wherein the overlapping parts are welded over the overall length of the overlapping portions.

7. Vehicle body frame according to one of the claims 1 to 6, wherein the left and right frame pieces include butt surfaces being butted in the left and right direction of the vehicle.

8. Vehicle body frame according to claim 7, wherein the butt surfaces are arranged on front portions or rear portions of the left and right frame pieces.

9. Vehicle body frame according to one of the claims 1 to 8, wherein the left and right frame pieces overlap together to be relatively immovable in a vertical direction.

10. Vehicle body frame according to one of the claims 1 to 9, wherein the left and right frame pieces are formed by casting.

11. Vehicle body frame according to one of the claims 1 to 10, wherein the split line of the left and right frame pieces is set along a vehicle center line.

12. Vehicle body frame according to one of the claims 1 to 11, wherein the left and right frame pieces include left and right head piece portions formed by dividing the head pipe into a left part and a right part in the vehicle breadth direction, the left and right head piece portions include butt surfaces being butted in the left and right direction of the vehicle, and the butt surface are welded together.

13. Vehicle body frame according to claim 12, wherein the head pipe includes upper and lower bearing press-fitted portions, into which bearings journaling a handle steering shaft are press-fitted, and is divided by a plane, which includes an axis of the bearing press-fitted portions, and weld traces are present on inner surfaces of the bearing press-fitted portions after weld-bonded portions are subjected to machining.

14. Vehicle body frame according to one of the claims 1 to 11, wherein the left and right frame pieces include left and right head piece portions formed by dividing the head pipe into a left part and a right part, left and right main piece portions formed by dividing the main frame into a left part and a right part, and left and right rear piece portions formed by dividing the rear frame into a left part and a right part, the left head piece portion, the left main piece portion, and the left rear piece portion are formed integrally, and the right head piece portion, the right main piece portion, and the right rear piece portion are formed integrally.

15. Vehicle body frame according to one of the claims 1 to 11, wherein the left and right frame pieces include left and right main piece portions formed by dividing the main frame into a left part and a right part, and left and right rear piece portions formed by dividing the rear frame into a left part and a right part, the head pipe is formed integral with either of the left and right main piece portions, the left main piece portion and the left rear piece portion are formed integrally, and the right main piece portion and the right rear piece portion are formed integrally.

16. Motorcycle comprising the vehicle body frame according to one of claims 1 to 15.
